# EUROPEAN PATENT APPLICATION

(11) **EP 3 878 628 A1**
(43) Date of publication of application: **15.09.2021**
(21) Application number: 19914648.1
(22) Date of filing: 06.12.2019
(51) Int. Cl.: B29C 53/04, B29C 53/80, B29C 70/06, B29K 105/08, B29L 9/00

(54) **LAMINATE SHAPING APPARATUS AND LAMINATE SHAPING METHOD**

(30) Priority: 07.02.2019 JP 2019020755
(71) Applicant: MITSUBISHI HEAVY INDUSTRIES, LTD., Chiyoda-ku, Tokyo 100-8332 (JP)
(72) Inventor: KITAZAWA Toshiki, Tokyo 100-8332 (JP); YAMATO Homare, Tokyo 100-8332 (JP); SHIMIZU Masahiko, Tokyo 100-8332 (JP); MANO Shoya, Tokyo 100-8332 (JP)
(74) Representative: Hoffmann Eitle
(86) International application number: PCT/JP2019/047944
(87) International publication number: WO 2020/162027

(57) **Abstract**

The purpose is to shape a laminate with high accuracy by properly causing the slipping between fiber sheets in the laminate during a bending processing of the laminate. A laminate shaping apparatus is equipped with: a holding section (2) for holding a sheet-like laminate (50) composed of a plurality of fiber sheets laminated on each other; and a slipping promotion section (3) which is arranged along a surface of a region other than a region held by the holding section (2) in the laminate (50) and is so configured as to promote the slipping between the fiber sheets in the laminate (50) during the bending processing of the laminate (50).

## Description

### Technical Field

The present invention relates to a laminate shaping apparatus and a laminate shaping method.

### Background Art

There is a case where aircraft structural members (for example, a stringer or the like) are formed of fiber reinforced plastic (FRP) (hereinafter referred to as a "composite material"). The composite material is manufactured as a desired structural member by flatly laminating a plurality of fiber sheets to form a laminate (charge) and shaping the laminate into a target shape.

The stringer is a long part that is long in one direction, and there is a case where the cross-sectional shape thereof changes along a longitudinal direction or a twist or a contour is formed according to an application location of an aircraft. As the cross-sectional shape of the stringer, there is a hat type, an S type, or the like. The hat type has flange portions formed at both ends, a cap portion formed at the center, and a web portion connecting each of the flange portions and the cap portion. The S type has flange portions formed at both ends and a web portion that connects the two flanges.

PTL 1 to PTL 3 below disclose methods of pushing a flat laminate into a forming tool to deform (bend) the laminate, thereby forming the laminate into a hat type or an S-shape.

### Citation List

### Patent Literature

[PTL 1] US Patent No. 8636935
[PTL 2] US Patent No. 9162396
[PTL 3] Japanese Patent No. 5931906

### Summary of Invention

### Technical Problem

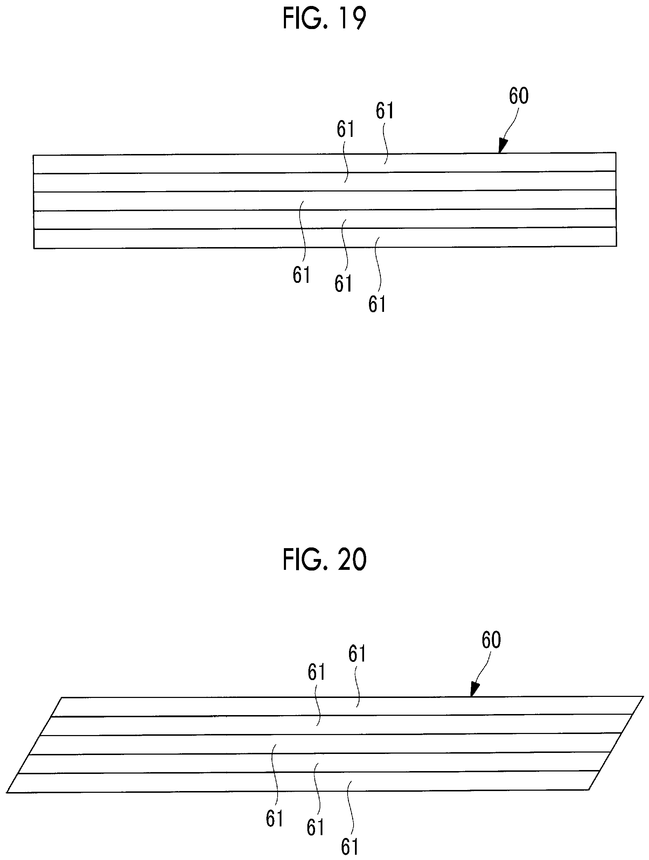

In a case of manufacturing a hat-type or S-type structural member, it is necessary to bend a flat laminate 60 as shown in Fig. 19, or a gently curved laminate 60 having a large radius of curvature. At this time, in a bent region, a difference in peripheral length occurs between the inner periphery side and the outer periphery side. Therefore, it is necessary to cause slipping to appropriately occur between a fiber sheet on the inner periphery side and a fiber sheet on the outer periphery side. When the movement of each fiber sheet 61 is uniform, as shown in Fig. 20, the laminate can be deformed in a shape in which the space between the fiber sheets 61 is kept constant.

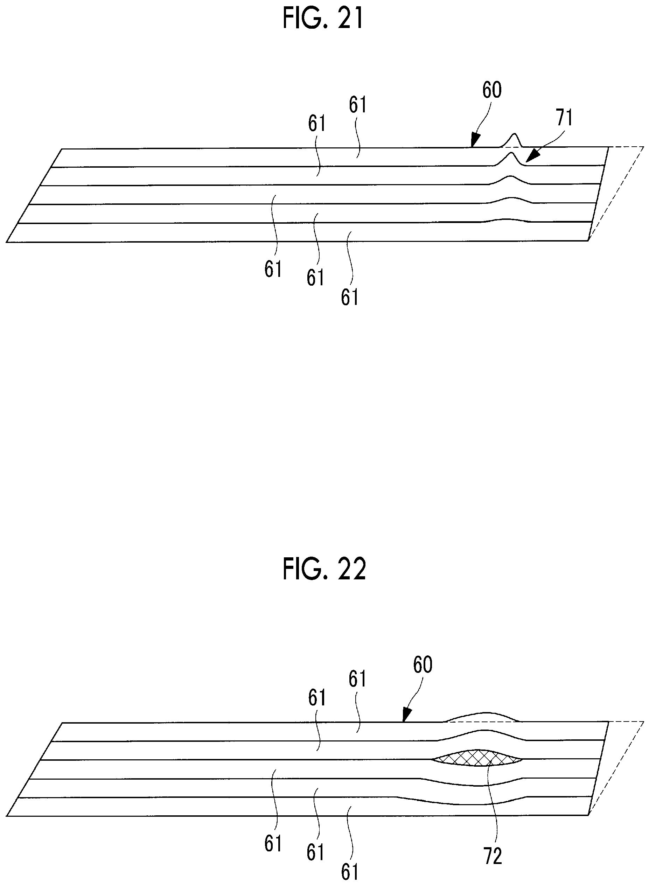

In a case where the fiber sheet does not appropriately slip between the fiber sheets (between layers) due to a frictional force, that is, in a case where each fiber sheet does not move at an appropriate distance in an appropriate direction, the fiber sheet is left over in an intermediate portion. As a result, as shown in Figs. 21 and 22, due to an excess fiber sheet 61 generated in the intermediate portion, there is a possibility that a wrinkle 71 (Fig. 21) or a void 72 (Fig. 22) may be generated or the shape of an end portion may be deformed.

In the methods described in PTL 1 to PTL 3, the end portion (flange portion) of the laminate is sandwiched by a pressing mechanism such as a bladder in a forming tool. Then, in view of the plastic deformation performance of the laminate, the end portion of the laminate is allowed to move to the center (cap portion) side together with the deformation of the laminate in a state of being sandwiched by the pressing mechanism.

Therefore, in the related art, even in the portion sandwiched by the pressing mechanism, slipping occurs between the fiber sheets at the end portion of the laminate, and therefore, there is a possibility that the movement of each fiber sheet may become uneven due to a frictional force and wrinkles or voids may occur due to an excess fiber sheet or the shape of the end portion may be deformed.

The present invention has been made in view of such circumstances and has an object to provide a laminate shaping apparatus and a laminate shaping method in which it is possible to accurately shape a laminate by appropriately generating slipping between fiber sheets of the laminate at the time of bending.

### Solution to Problem

In order to solve the above problems, a laminate shaping apparatus and a laminate shaping method according to the present invention adopt the following means.

That is, according to an aspect of the present invention, there is provided a laminate shaping apparatus including: a clamp portion that clamps a plate-shaped laminate in which a plurality of fiber sheets are laminated; and a slipping promotion portion that is disposed along a surface of the laminate in a region other than a region of the laminate clamped by the clamp portion and is configured to promote slipping between the fiber sheets of the laminate when performing bending on the laminate.

According to this configuration, the clamp portion clamps the laminate, and the slipping promotion portion is disposed along the surface of the laminate in a region other than the region of the laminate clamped by the clamp portion. The slipping promotion portion promotes slipping between the fiber sheets of the laminate when the bending is performed on the laminate. The slipping between the fiber sheets occurs in the region where the slipping between the fiber sheets is to be promoted by the slipping promotion portion. As a result, the movement of each fiber sheet is unlikely to be uneven, an excess fiber sheet is not generated, and thus wrinkles or voids are not generated or the shape of the end portion is not deformed.

In the above invention, the laminate shaping apparatus may further include: a drive unit that moves the clamp portion; and a drive control unit that controls the drive unit such that the bending is performed on the laminate by moving the clamp portion.

According to this configuration, the bending is performed on the laminate by moving the clamp portion.

In the above invention, the slipping promotion portion may have a configuration of applying a frictional force to the surface of the laminate so as to move the fiber sheet in a slip direction at the time of the bending.

According to this configuration, the fiber sheets are forcibly moved in the slip direction at the time of the bending while the slipping promotion portion applies a frictional force to the surface of the laminate. The slipping promotion portion is, for example, a roller, a caterpillar, a plate member, a vacuum chuck, or the like.

In the above invention, the slipping promotion portion may have a configuration of reducing a coefficient of friction between the fiber sheets so as to promote slipping between the fiber sheets at the time of the bending.

According to this configuration, the slipping promotion portion reduces the coefficient of friction between the fiber sheets to promote the slipping between the fiber sheets at the time of the bending. The slipping promotion portion is, for example, a heating device, a vacuum chuck, or the like.

According to another aspect of the present invention, there is provided a laminate shaping method including: a step of clamping a plate-shaped laminate, in which a plurality of fiber sheets are laminated, by a plurality of clamp portions; and a step of promoting slipping between the fiber sheets of the laminate by a slipping promotion portion disposed along a surface of the laminate in a region other than a region of the laminate clamped by the clamp portion, when performing bending on the laminate.

### Advantageous Effects of Invention

According to the present invention, it is possible to accurately shape a laminate by appropriately generating slipping between fiber sheets of the laminate at the time of bending.

### Brief Description of Drawings

Fig. 1 is a configuration diagram showing a shaping apparatus according to an embodiment of the present invention.
Fig. 2 is a schematic configuration diagram showing a clamp portion and a slipping promotion portion of the shaping apparatus according to the embodiment of the present invention, and shows a step of forming a hat-type laminate.
Fig. 3 is a schematic configuration diagram showing the clamp portion and the slipping promotion portion of the shaping apparatus according to the embodiment of the present invention, and shows a step of forming the hat-type laminate.
Fig. 4 is a schematic configuration diagram showing the clamp portion and the slipping promotion portion of the shaping apparatus according to the embodiment of the present invention, and shows a step of forming the hat-type laminate.
Fig. 5 is a schematic configuration diagram showing the clamp portion and the slipping promotion portion of the shaping apparatus according to the embodiment of the present invention, and shows a step of forming an S-type laminate.
Fig. 6 is a schematic configuration diagram showing the clamp portion and the slipping promotion portion of the shaping apparatus according to the embodiment of the present invention, and shows a step of forming the S-type laminate.
Fig. 7 is a schematic configuration diagram showing the clamp portion and the slipping promotion portion of the shaping apparatus according to the embodiment of the present invention, and shows a step of forming the S-type laminate.
Fig. 8 is a schematic configuration diagram showing the clamp portion and the slipping promotion portion of the shaping apparatus according to the embodiment of the present invention, and shows a step of forming the S-type laminate.
Fig. 9 is a schematic configuration diagram showing the clamp portion and the slipping promotion portion of the shaping apparatus according to the embodiment of the present invention, and shows a step of forming an L-type laminate.
Fig. 10 is a schematic configuration diagram showing the clamp portion and the slipping promotion portion of the shaping apparatus according to the embodiment of the present invention, and shows a step of forming the L-type laminate.
Fig. 11 is a schematic configuration diagram showing the clamp portion and the slipping promotion portion of the shaping apparatus according to the embodiment of the present invention, and shows a step of forming the L-type laminate.
Fig. 12 is a schematic configuration diagram showing the clamp portion and the slipping promotion portion of the shaping apparatus according to the embodiment of the present invention, and shows a step of forming the L-type laminate.
Fig. 13 is a schematic configuration diagram showing a first example of the clamp portion and the slipping promotion portion of the shaping apparatus according to the embodiment of the present invention.
Fig. 14 is a schematic configuration diagram showing a second example of the clamp portion and the slipping promotion portion of the shaping apparatus according to the embodiment of the present invention.
Fig. 15 is a schematic configuration diagram showing a third example of the clamp portion and the slipping promotion portion of the shaping apparatus according to the embodiment of the present invention.
Fig. 16 is a schematic configuration diagram showing a fourth example of the clamp portion and the slipping promotion portion of the shaping apparatus according to the embodiment of the present invention.
Fig. 17 is a schematic configuration diagram showing a fifth example of the clamp portion and the slipping promotion portion of the shaping apparatus according to the embodiment of the present invention.
Fig. 18 is a schematic configuration diagram showing the clamp portion and the slipping promotion portion of the shaping apparatus according to the embodiment of the present invention, and shows a step of forming an S-type laminate by using a sheet.
Fig. 19 is a schematic vertical sectional view showing a laminate before shaping.
Fig. 20 is a schematic vertical sectional view showing a laminate after shaping, and shows a state where a fiber sheet is appropriately moved.
Fig. 21 is a schematic vertical sectional view showing a laminate after shaping, and shows a state where wrinkles are formed in the fiber sheets.
Fig. 22 is a schematic vertical sectional view showing a laminate after shaping, and shows a state where a void is formed between the fiber sheets.

### Description of Embodiments

Hereinafter, an embodiment according to the present invention will be described with reference to the drawings.

A fiber reinforced plastic formed product is formed of a fiber reinforced plastic (FRP) that is composed of a fiber base material and a resin. The fiber reinforced plastic formed product is an FRP structure constituting an aircraft, an FRP formed product constituting various other devices or structures, or the like. A stringer, which is one of the FRP structures, is an elongated member that is long in one direction, and the dimension thereof in a longitudinal direction is longer than the dimension in a width direction that intersects the longitudinal direction. The cross section of the stringer is, for example, a hat type or an S type.

A hat-type stringer has flange portions formed at both ends, a cap portion formed at the center, and a web portion connecting each of the flange portions and the cap portion. An S-type stringer has flange portions formed at both ends and a web portion connecting the two flanges.

The fiber sheet is a sheet-like member. Any fiber such as carbon fiber or glass fiber is used for the fiber base material. The fiber sheets are laminated by a required number of sheets according to the thickness of the stringer, and a laminate is configured by laminating a plurality of fiber sheets. In the present embodiment, the fiber sheet is a prepreg in which a fiber base material is impregnated with a resin. However, there is no limitation thereto, and a dry sheet that can be shaped may be adopted.

The laminate before bending may have a flat shape or may have a gently curved surface shape having a large radius of curvature.

After the laminate is shaped (formed) into a target shape by using a shaping apparatus 1 according to the present embodiment, the resin is cured by heating and/or pressurization using an autoclave or the like, so that a fiber reinforced plastic formed product is formed.

Next, the shaping apparatus 1 according to the present embodiment, which shapes (forms) a laminate into a target shape will be described.

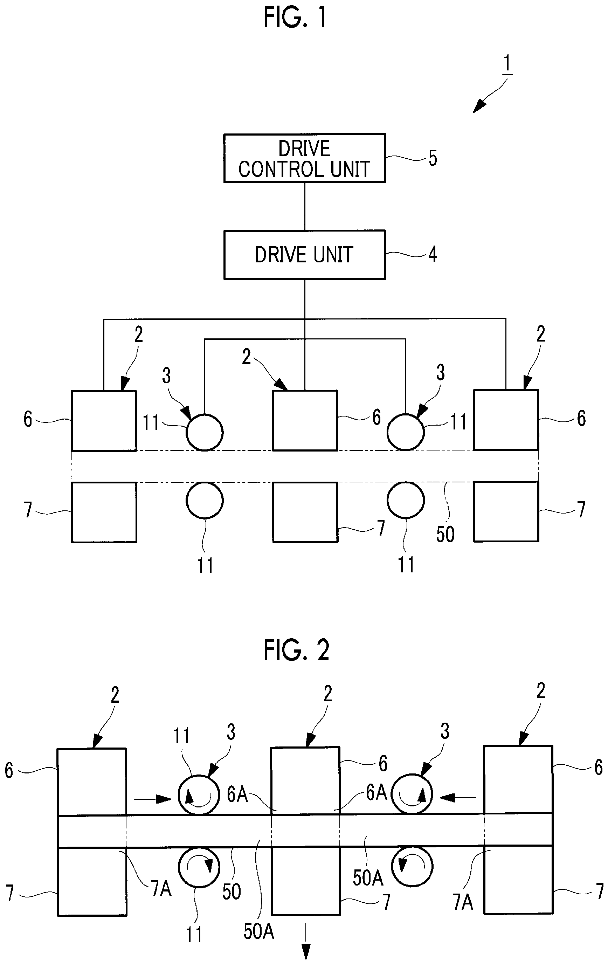

As shown in Fig. 1, the shaping apparatus 1 includes a clamp portion 2, a slipping promotion portion 3, a drive unit 4, a drive control unit 5, and the like, and performs bending on a laminate 50. By the bending, the laminate 50 having a bent portion in the cross-sectional shape is formed. The bent laminate 50 is formed as a fiber reinforced plastic formed product having a cross-sectional shape such as a hat type or an S type via a curing step or the like.

The clamp portion 2 has a first presser 6 and a second presser 7 that are parallel to each other and are respectively disposed on one surface side and the other surface side of the laminate 50.

The first presser 6 and the second presser 7 can apply a pressing force to the laminate 50 interposed therebetween by moving in a direction approaching each other. On the contrary, the first presser 6 and the second presser 7 move in a direction away from each other, whereby it is possible to install the laminate 50 between the first presser 6 and the second presser 7 or reduce the pressing force applied to the interposed laminate 50.

Each of the first presser 6 and the second presser 7 has a pressing surface. The pressing surface has, for example, a quadrangular surface and comes into contact with the interposed laminate 50. The first presser 6 and the second presser 7 may have corner portions 6A and 7A at the end sides of the pressing surfaces. When the bending is performed in a state where the clamp portion 2 clamps the laminate 50, the laminate 50 is bent starting from the corner portions 6A and 7A. The cross-sectional shapes of the corner portions 6A and 7A may match the shapes corresponding to the target shapes (for example, arc shapes) of the bent portions of the laminate 50 to be formed. In this case, each of the first presser 6 and the second presser 7 of the clamp portion 2 exerts a function as a forming tool.

The clamp portion 2 is configured to be movable by the drive unit 4 in a state where it clamps the laminate 50. In this way, the clamp portion 2 can change the installation position together with the interposed laminate 50.

The slipping promotion portion 3 is disposed along the surface of the laminate 50 in a region other than the region of the laminate 50 clamped by the clamp portion 2, and is configured to promote slipping between the fiber sheets of the laminate 50 when the bending is performed on the laminate 50. It is desirable that the slipping promotion portion 3 is disposed at each of one surface side and the other surface side of the laminate 50. As a method of promoting slipping between the fiber sheets, there is a method of forcibly moving the fiber sheets in a slip direction at the time of the bending while applying a frictional force to the surface of the laminate 50, or a method of reducing the coefficient of friction between the fiber sheets to promote slipping between the fiber sheets at the time of the bending.

In this way, the slipping between the fiber sheets occurs in a region 50A where the slipping promotion portion 3 promotes the slipping between the fiber sheets. As a result, the movement of each fiber sheet is unlikely to be uneven, an excess fiber sheet is not generated, and thus wrinkles or voids are not generated or the shape of the end portion is not deformed.

The slipping promotion portion 3 is configured to be movable by the drive unit 4 when performing the bending. In this way, the slipping promotion portion 3 can change the installation position together with the laminate 50. For example, the slipping promotion portion 3 rotates with the bent portion as the center in a state of being disposed along the surface of the laminate 50.

The drive unit 4 is connected to the clamp portion 2 and moves the clamp portion 2. The drive unit 4 is connected to the slipping promotion portion 3 and moves the slipping promotion portion 3. General techniques can be applied to the configuration of the drive unit 4, and detailed description thereof will be omitted in the present specification.

The drive control unit 5 controls the drive unit 4 such that the bending is performed on the laminate 50 by the movement of the clamp portion 2. For example, the drive control unit 5 controls the drive unit 4 such that the clamp portion 2 moves based on a path determined in advance. The movement path of the clamp portion 2 is calculated and determined in advance according to the target shape of the laminate 50 to be formed. The drive control unit 5 controls the drive unit 4 such that the slipping promotion portion 3 moves following the laminate 50. The operation of the drive control unit 5 is realized by executing a program recorded in advance by using hardware resources such as a CPU.

In a case where the laminate 50 to be formed is a hat type, the distance between the plurality of clamp portions 2 corresponds to the length of the region of the laminate 50, which is to become a web portion. In a case where the clamp portion 2 clamps the region of the laminate 50, which is to become a cap portion, the width of the pressing surface of each of the first presser 6 and the second presser 7 corresponds to the length of the cap portion. In a case where the clamp portion 2 clamps the region of the laminate 50, which is to become a flange portion, the width of the presser surface of each of the first presser 6 and the second presser 7 may be equal to or different from the length of the flange portion.

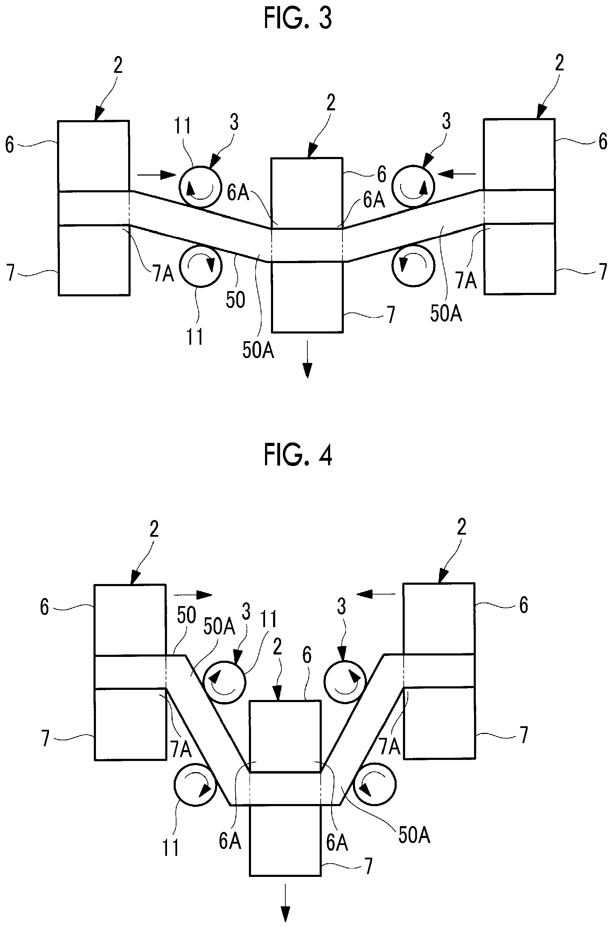

In a case of forming a hat-type laminate 50, as shown in Figs. 2 to 4, three clamp portions 2 and two slipping promotion portions 3 each installed between the clamp portions 2 are used. The clamp portion 2 that is installed at the center clamps the region of the laminate 50, which is to become a cap portion. The clamp portions 2 are disposed to be separated from each other. The clamp portions 2 respectively installed at both ends clamp the regions of the laminate 50, which are to become flange portions. When the bending is performed, the clamp portion 2 installed at the center moves in the thickness direction of the laminate 50, and the clamp portion 2 installed at the end portion moves toward the center side in the direction (in the case of the flat plate-shaped laminate 50, the direction parallel to the in-plane direction of the laminate 50) intersecting the thickness direction of the laminate 50. The slipping promotion portion 3 moves following the laminate 50.

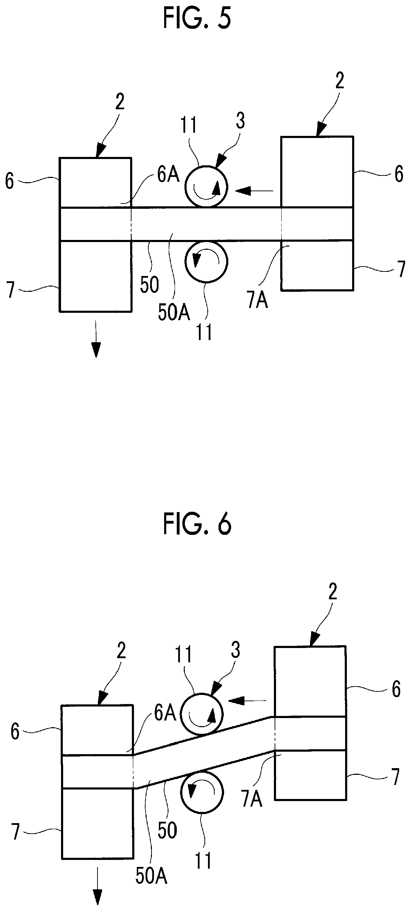

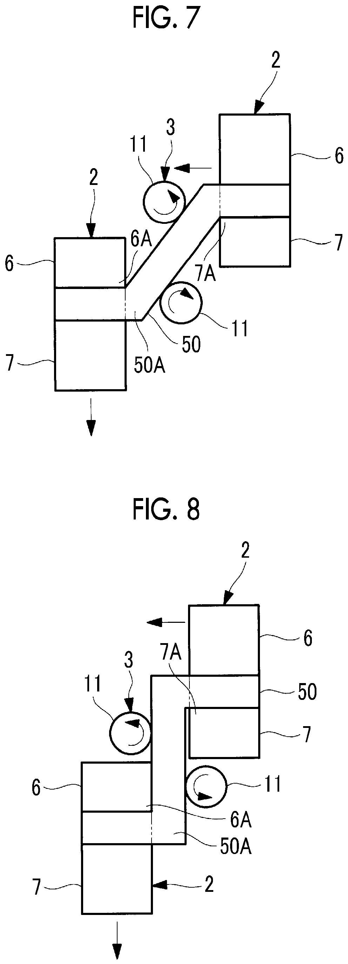

In a case of forming an S-type laminate 50, as shown in Figs. 5 to 8, two clamp portions 2 and one slipping promotion portion 3 installed between the clamp portions 2 are used. Each of the clamp portions 2 clamps the region of the laminate 50, which is to become a flange portion. The clamp portions 2 are disposed to be separated from each other. When the bending is performed, the clamp portion 2 installed on one end side moves in the thickness direction of the laminate 50, and the clamp portion 2 installed on the other end side moves toward the clamp portion 2 installed on one end side in the direction (in the case of the flat plate-shaped laminate 50, the direction parallel to the in-plane direction of the laminate 50) intersecting the thickness direction of the laminate 50. The slipping promotion portion 3 moves following the laminate 50.

Each of the clamp portions 2 moves at the same time in a state where in each fiber sheet of the laminate 50, a tensile force continues to act in the in-plane direction of the fiber sheet. By preventing a compressive force from acting in the in-plane direction in the fiber sheet at the time of the bending, the slipping between the fiber sheets is appropriately generated in the region 50A where the slipping between the fiber sheets is not suppressed.

In the above description, the case where all the clamp portions 2 move at the same time has been described. However, the present invention is not limited to this example, and only the clamp portion 2 on the other side may move while the clamp portion 2 on one side is stopped. For example, in a case of forming the hat-type laminate 50, only the clamp portion 2 that clamps the region of the laminate 50, which is to become the flange portion, moves. In a case of forming the S-type laminate 50, only the clamp portion 2 that clamps the region of the laminate 50, which is to become the flange portion on one side, moves. In these cases, the clamp portion 2 on the moving side moves so as to rotate with the bent portions that are formed (the corner portions 6A and 7A of the fixed clamp portion 2) as the center.

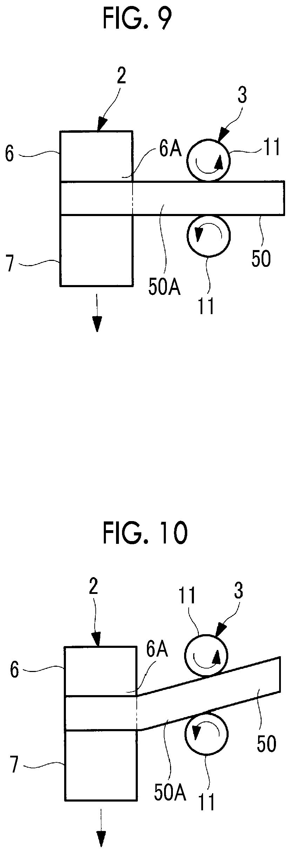

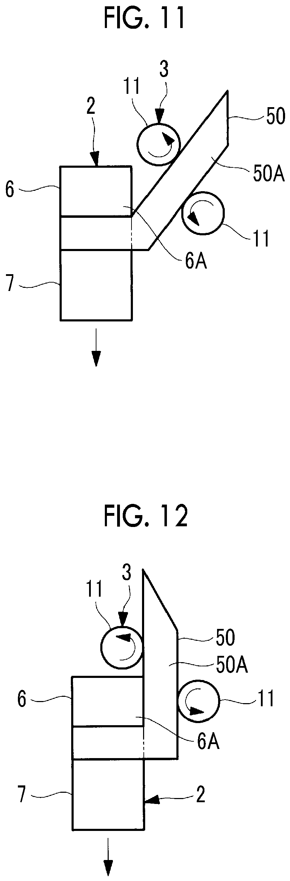

In a case of forming an L-type laminate 50, as shown in Figs. 9 to 12, one clamp portion 2 and one slipping promotion portion 3 are used. The clamp portion 2 clamps the region of the laminate 50, which is to become a flange portion. When the bending is performed, the clamp portion 2 moves in the thickness direction of the laminate 50. The slipping promotion portion 3 moves following the laminate 50. In a case of forming the L-type laminate 50, there is no limitation to the example of the configuration and operation shown in Figs. 9 to 12. For example, the bending may be performed by moving only the slipping promotion portion 3 while the clamp portion 2 is stopped, or by further providing a bending mechanism (not shown) different from the clamp portion 2 and the slipping promotion portion 3.

Next, a processing method using the shaping apparatus 1 according to the present embodiment will be described.

First, the laminate 50 to be processed by bending is installed in the clamp portion 2. At this time, the laminate 50 is installed between the first presser 6 and the second presser 7, and the first presser 6 and the second presser 7 are brought close to each other to sandwich the laminate 50 therebetween.

The slipping promotion portion 3 is disposed along the surface of the laminate 50 in a region other than the region clamped by the clamp portion 2.

Next, the bending is performed on the laminate 50 by moving the clamp portion 2 and the slipping promotion portion 3. When the bending is performed, the laminate 50 is bent starting from the corner portions 6A and 7A of the first presser 6 and/or the second presser 7. At this time, the clamp portion 2 and the slipping promotion portion 3 move based on a movement path determined in advance such that the laminate 50 has a target shape. The slipping promotion portion 3 is used to promote the slipping between the fiber sheets in the region 50A where the slipping between the fiber sheets occurs.

Then, the bending is continued until the laminate 50 reaches the target shape, and when the laminate 50 has reached the target shape, the bending is stopped.

Hereinafter, examples of the slipping promotion portion 3 will be described.

The slipping promotion portion 3 according to a first example has a roller 11, as shown in Figs. 1 to 12 or Fig. 13. One or more rollers 11 are disposed at each of one surface side and the other surface side of the laminate 50. In a case where a plurality of rollers 11 are disposed at each of one surface side and the other surface side of the laminate 50, each roller 11 is disposed along the surface of the laminate 50.

The roller 11 has a drive unit such as a motor and is rotatable around an axis. When the bending is performed on the laminate 50, the roller 11 applies a frictional force to the surface of the laminate 50 and applies a force in the slip direction of the fiber sheet by the rotation force of the roller 11. In this way, at the time of the bending, the fiber sheets are forcibly moved in the slip direction as compared with a case where the slipping promotion portion 3 is not used, and therefore, the slipping between the fiber sheets of the laminate 50 can be promoted.

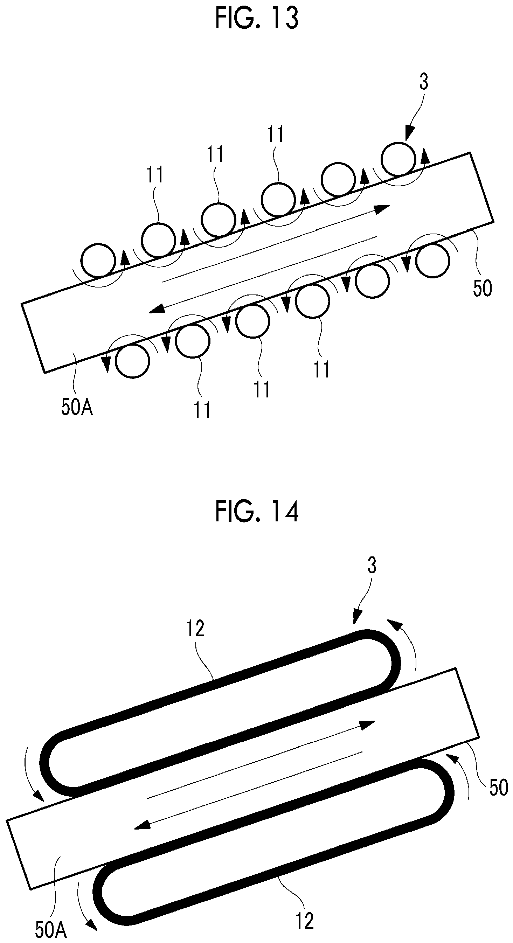

The slipping promotion portion 3 according to a second example has a caterpillar 12 that is an endless track-shaped belt, as shown in Fig. 14. One or more caterpillars 12 are disposed at each of one surface side and the other surface side of the laminate 50. The caterpillar 12 and the laminate 50 are in surface contact with each other.

The caterpillar 12 has a drive unit such as a motor and is rotatable in a circumferential direction. When the bending is performed on the laminate 50, the caterpillar 12 applies a frictional force to the surface of the laminate 50 and applies a force in the slip direction of the fiber sheet by the rotation force of the caterpillar 12. In this way, at the time of the bending, the fiber sheets are forcibly moved in the slip direction as compared with a case where the slipping promotion portion 3 is not used, and therefore, the slipping between the fiber sheets of the laminate 50 can be promoted.

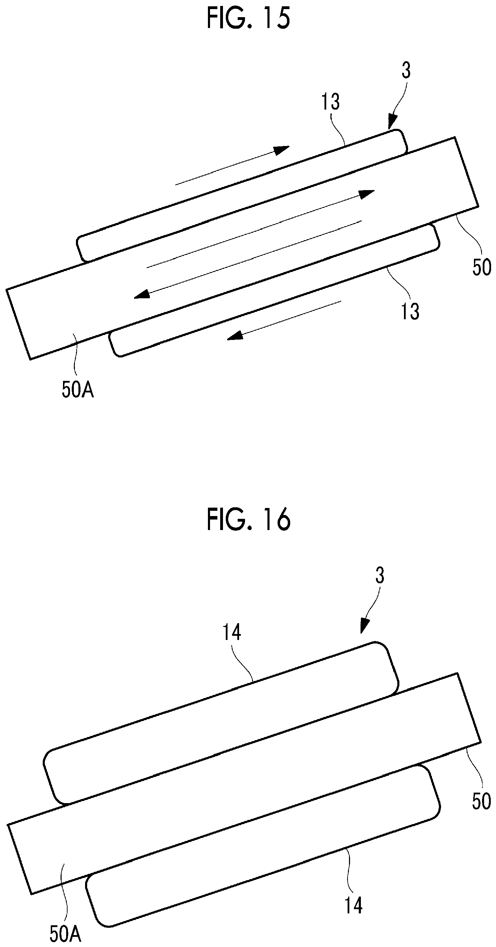

The slipping promotion portion 3 according to a third example has a flat plate-shaped plate member 13, as shown in Fig. 15. One or more plate members 13 are disposed at each of one surface side and the other surface side of the laminate 50. The plate member 13 and the laminate 50 are in surface contact with each other.

The plate member 13 is connected to a drive unit such as a motor and can move and rotate so as to move while being in contact with the surface of the laminate 50. When the bending is performed on the laminate 50, the plate member 13 applies a frictional force to the surface of the laminate 50 and applies a force in the slip direction of the fiber sheet due to the force that is generated by the movement of the plate member 13. In this way, at the time of the bending, the fiber sheets are forcibly moved in the slip direction as compared with a case where the slipping promotion portion 3 is not used, and therefore, the slipping between the fiber sheets of the laminate 50 can be promoted.

The slipping promotion portion 3 according to a fourth example has a heating device 14, as shown in Fig. 16. The heating device 14 is, for example, a heater, a heating wire, or the like. One or more heating devices 14 are disposed along the surface of the laminate 50 at each of one surface side and the other surface side of the laminate 50. The heating device 14 is connected to a drive unit such as a motor and can move and rotate so as to move along the surface of the laminate 50.

The heating device 14 heats the region 50A where the slipping between the fiber sheets is to be promoted to reduce the viscosity of the resin in the heated region 50A. In this way, the coefficient of static friction between the fiber sheets is reduced. As a result, at the time of the bending, the fiber sheets easily move in the slip direction as compared with a case where the slipping promotion portion 3 is not used, and therefore, the slipping between the fiber sheets of the laminate 50 can be promoted.

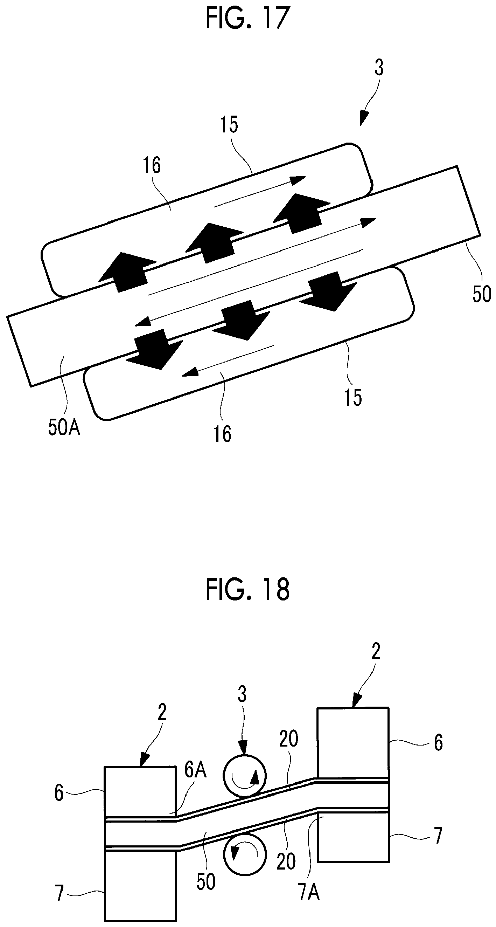

The slipping promotion portion 3 according to a fifth example has a vacuum chuck 15, as shown in Fig. 17. The vacuum chuck 15 is provided with a flat plate-shaped porous material 16 and sucks air between itself and the laminate 50 to attract the laminate 50. The porous material 16 and the laminate 50 come into surface contact with each other at the time of the attraction. One or more vacuum chucks 15 are disposed along the surface of the laminate 50 at each of one surface side and the other surface side of the laminate 50. The vacuum chuck 15 has a drive unit such as a motor and can move and rotate so as to move while being in contact with the surface of the laminate 50.

When the bending is performed on the laminate 50, the porous material 16 of the vacuum chuck 15 applies a frictional force to the surface of the laminate 50 in a state where the porous material is attracted to the laminate 50, and applies a force in the slip direction of the fiber sheet due to the force that is generated by the movement of the porous material 16. In this way, at the time of the bending, the fiber sheets are forcibly moved in the slip direction as compared with a case where the slipping promotion portion 3 is not used, and therefore, the slipping between the fiber sheets of the laminate 50 can be promoted.

The vacuum chuck 15 applies a force in a direction of pulling the fiber sheets apart in the region 50A where the slipping between the fiber sheets is to be promoted. In this way, the coefficient of static friction between the fiber sheets is reduced. As a result, at the time of the bending, the fiber sheets easily move in the slip direction as compared with a case where the slipping promotion portion 3 is not used, and therefore, the slipping between the fiber sheets of the laminate 50 can be promoted.

Each of the first to fifth examples may be used alone, and the configurations of a plurality of examples may be used in combination.

As shown in Fig. 18, the bending may be performed in a state where a sheet 20 (for example, a synthetic resin sheet, a thin metal plate, or the like) having a lower elastic modulus than the laminate 50 is disposed at each of both sides of the laminate 50 to be bent. In this way, at the time of the bending, the sheet 20 can suppress the out-of-plane deformation of the fiber sheet in the region 50A where the slipping between the fiber sheets is not suppressed, and thus wrinkles and voids are less likely to occur.

### Reference Signs List

- 1:: shaping apparatus
- 2:: clamp portion
- 3:: slipping promotion portion
- 4:: drive unit
- 5:: drive control unit
- 6:: first presser
- 6A, 7A:: corner portion
- 7:: second presser
- 11:: roller
- 12:: caterpillar
- 13:: plate member
- 14:: heating device
- 15:: vacuum chuck
- 16:: porous material
- 20:: sheet
- 50, 60:: laminate
- 61:: fiber sheet

## Claims

1. A laminate shaping apparatus comprising:
a clamp portion that clamps a plate-shaped laminate in which a plurality of fiber sheets are laminated; and
a slipping promotion portion that is disposed along a surface of the laminate in a region other than a region of the laminate clamped by the clamp portion and is configured to promote slipping between the fiber sheets of the laminate when performing bending on the laminate.

2. The laminate shaping apparatus according to claim 1, further comprising:
a drive unit that moves the clamp portion; and
a drive control unit that controls the drive unit such that the bending is performed on the laminate by moving the clamp portion.

3. The laminate shaping apparatus according to claim 1 or 2, wherein the slipping promotion portion has a configuration of applying a frictional force to the surface of the laminate so as to move the fiber sheet in a slip direction at the time of the bending.

4. The laminate shaping apparatus according to any one of claims 1 to 3, wherein the slipping promotion portion has a configuration of reducing a coefficient of friction between the fiber sheets so as to promote slipping between the fiber sheets at the time of the bending.

5. A laminate shaping method comprising:
a step of clamping a plate-shaped laminate, in which a plurality of fiber sheets are laminated, by a plurality of clamp portions; and
a step of promoting slipping between the fiber sheets of the laminate by a slipping promotion portion disposed along a surface of the laminate in a region other than a region of the laminate clamped by the clamp portion, when performing bending on the laminate.
